# EUROPEAN PATENT APPLICATION

(11) **EP 2 648 368 A1**
(43) Date of publication of application: **09.10.2013**
(21) Application number: 11844381.1
(22) Date of filing: 25.11.2011
(51) Int. Cl.: H04L 12/28, B60R 16/02, B60R 16/023

(54) **OPERATION SUPPORT DEVICE, ELECTRONIC APPARATUS, ELECTRONIC CONTROL DEVICE, AND CONTROL SYSTEM**

(30) Priority: 29.11.2010 JP 2010264744
(71) Applicant: Yazaki Corporation, Minato-ku Tokyo 108-8333 (JP)
(72) Inventor: MAEJIMA Yoshimitsu, Shizuoka (JP)
(74) Representative: Grünecker, Kinkeldey, Stockmair & Schwanhäusser
(86) International application number: PCT/JP2011/077180
(87) International publication number: WO 2012/073818

(57) **Abstract**

An object of the present invention is to provide an operation support device, an electronic apparatus, an electronic control device, and a control system capable of suppressing increase in manufacturing cost while securing safety at failure time of the electronic control device. A vehicle control system (1) has a main control apparatus (11), a plurality of relaying connector units (21, 22), lower-level network lines (43, 44) provided in correspondence to the relaying connector units (21, 22), and a plurality of electronic devices (31 to 36) connected to the lower-level network lines (43 and 44). Moreover, the relaying connector unit (22) monitors failure of the other relaying connector unit (2 1) and upon detection of failure thereof, transmits an operation state transition request control signal, for transitioning the electronic apparatuses (31, 32) controlled by the other relaying connector unit (21) to safe operation states which have been pre-defined for each of the electronic apparatuses, from an other line connection portion (27) to the electronic apparatuses (31, 32).

## Description

### Technical Field

The present invention relates to an operation support apparatus that supports an operation of an electronic device, which is controlled by a faulty electronic control unit, and relates to an electronic device, an electronic control unit and a control system having the operation support apparatus.

### Background Art

A vehicle such as automobile and truck is mounted with a variety of electronic devices configuring a headlight, a defogger, an air conditioner, a power window and the like. The electronic devices are connected to an electronic control unit (ECU) consisting of a computer and the like through a wire harness.

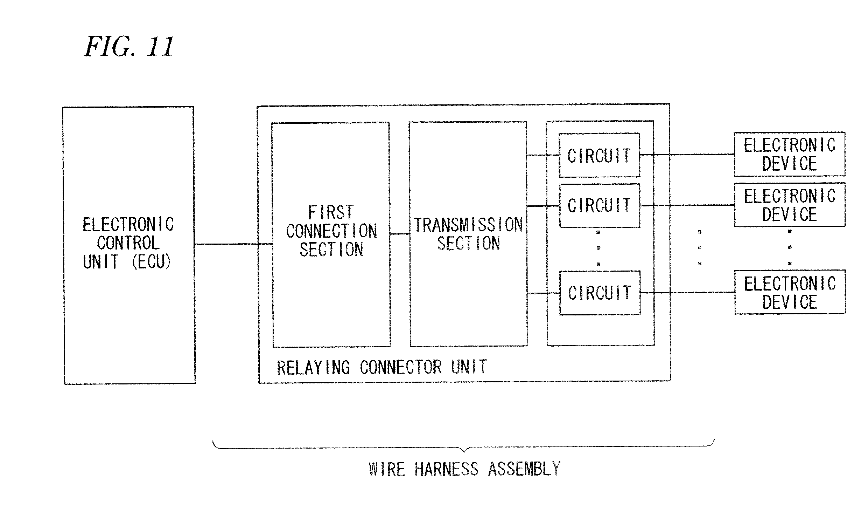

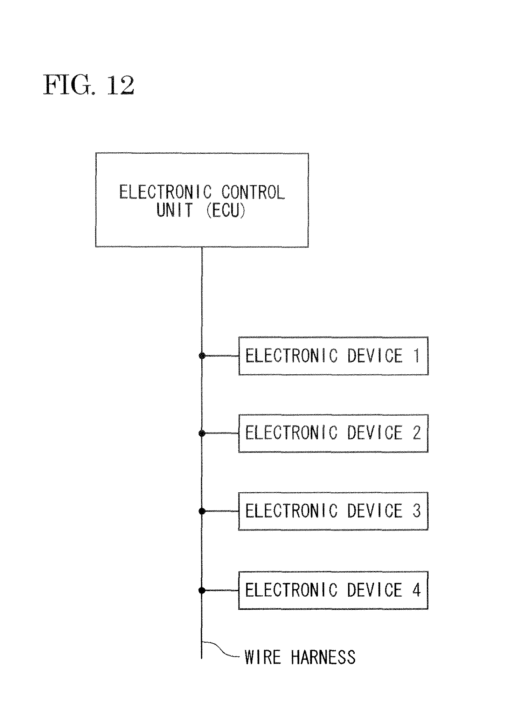

A connection configuration of the electronic devices and the ECU is adopted for example, as shown in FIG. 11, as a configuration (refer to Patent Literature 1) using a wire harness assembly to which a relaying connector unit having a communication control function of relaying communication between a plurality of electronic devices and an ECU is provided. Further, it is also adopted, for example, as shown in FIG. 12, as a configuration of bus-connecting an ECU and a plurality of electronic devices by a wire harness. Each electronic device performs a variety of operation in response to a control signal that is transmitted from the ECU via the wire harness, or the like.

However, when the ECU or relaying connector unit that is an ECU in a broad sense gets out of order, the respective electronic devices that are connected to the ECU via the wire harness cannot be controlled. Therefore, in the electronic devices of the related art, lighting of the headlight, defogging of a rear window by the defogger and the like cannot be made, so that inconvenience is caused as regards operations of the vehicle. Thereby, a serious situation that endangers a passenger may be caused.

Therefore, in order to solve the above problem, it is necessary to provide each electronic device with a function that enables each electronic device to detect the failure based on a transmission time interval of the control signal from the ECU and to shift to a predetermined safety operation state that has been pre-defined for each electronic device, where the electronic device itself turns on the headlight, performs the defogging for the rear window by the defogger, and the like, when the failure of the ECU is detected.

### Citation List

### Patent Literature

Patent Literature 1: JP-A-2008-225673

### Summary of Invention

### Technical Problem

However, most of the operations of the respective electronic devices mounted on the vehicle are simple such as lighting/extinction of the light, power feeding to a heating wire, opening and closing of a switch for interruption, rotation of a motor by a predetermined amount and the like. Since the operations are simple, it is necessary to mount the function of detecting the failure of the ECU and the like on each electronic device, in addition to the processing of performing the simple operations for implementing the inherent functions. Hence, a design of the electronic device becomes complicated and the throughput is increased to enhance hardware resources (such as memory, CPU), so that the manufacturing cost of the electronic devices and a control system including the electronic devices is increased.

The present invention has been made to solve the above problems. An object of the present invention is to provide an operation support apparatus, an electronic device, an electronic control unit and a control system capable of suppressing increase in manufacturing cost while securing safety at failure time of the electronic control unit.

### Solution to Problem

In order to achieve the object, an operation support apparatus according to the present invention is an operation support apparatus that supports aperations of one or more electronic devices mounted on a vehicle when an electronic control unit is out of order, wherein the electronic control unit is connected to the electronic devices through a control signal line and controls the electronic devices through the control signal line, the operation support apparatus including: a failure detecting section that is adapted to detect a failure of the electronic control unit; a signal output section that is connected to the control signal line so as to transmit a control signal to the electronic devices; and a control signal transmitting section that is adapted to transmit an operation state transition request control signal to the electronic devices through the signal output section when the failure detecting section detects the failure of the electronic control unit, wherein the operation state transition request control signal is defined for shifting the electronic devices to safe operation states that have been pre-defined for each of the electronic devices.

The operation support apparatus according to the present invention includes a failure notifying section that is adapted to notify of the failure of the electronic control unit when the failure detecting section detects the failure.

In order to achieve the object, an electronic device according to the present invention is an electronic device that is connected to an electronic control unit through a control signal line and controlled by the electronic control unit through the control signal line, the electronic device including: an operation support apparatus that supports an operation of another electronic device when the electronic control unit is out of order, wherein the another electronic device is connected to the electronic control unit through the control signal line and controlled by the electronic control unit through the control signal line, wherein the operation support apparatus includes: a failure detecting section that is adapted to detect a failure of the electronic control unit; a signal output section that is connected to the control signal line so as to transmit a control signal to the another electronic device; and a control signal transmitting section that is adapted to transmit an operation state transition request control signal to the another electronic device through the signal output section when the failure detecting section detects the failure of the electronic control unit, wherein the operation state transition request control signal is defined for shifting the other electronic device to a safe operation state that has been pre-defined for the another electronic device.

In order to achieve the object, an electronic control unit according to the present invention is an electronic control unit including: one or more operation support apparatuses that support operation of one or more electronic devices mounted on a vehicle and controlled by another electronic control unit that is out of order when the another electronic control unit is out of order, wherein the another electronic control unit is connected to the electronic devices through a control signal line and controls the electronic devices through the control signal line, wherein each of the operation support apparatuses includes: a failure detecting section that is adapted to detect a failure of the another electronic control unit; a signal output section that is connected to the control signal line so as to transmit a control signal to the electronic devices; and a control signal transmitting section that is adapted to transmit an operation state transition request control signal to the electronic devices through the signal output section when the failure detecting section detects the failure of the another electronic control unit, wherein the operation state transition request control signal is defined for shifting the electronic devices to safe operation states that have been pre-defined for each of the electronic devices.

In order to achieve the object, a control system according to the present invention is a control system including: a plurality of electronic control units; a plurality of control signal lines that are provided in correspondence to the electronic control units, respectively; and a plurality of electronic devices that are respectively connected to the electronic control units through the control signal lines and controlled by the electronic control units, wherein at least one of the electronic control units is configured as the electronic control unit according to the present invention, and the electronic devices are configured to transition to pre-defined safe operation states when received a predetermined operation state transition request control signal.

According to the operation support apparatus of the present invention, the failure detecting section detects a failure of the electronic control unit. When the failure is detected, the control signal transmitting section transmits an operation state transition request control signal, for shifting the electronic devices controlled by the electronic control unit to safe operation states that have been pre-defined for each of the electronic devices, to the electronic devices through the signal output section that is connected to the control signal line so that it can transmit a control signal to the electronic devices. That is, the operation support apparatus transmits the operation state transition request control signal to the electronic devices, which are controlled by the electronic control unit, upon detection of the failure of the electronic control unit, and the electronic devices are configured to transition to the pre-defined safe operation states upon reception of the operation state transition request control signal. Thereby, it is possible to shift the electronic devices to the safe operation states without mounting the function of detecting the failure of the electronic control unit and the like on the electronic devices.

Also, according to the operation support apparatus of the present invention, when the failure detecting section detects the failure of the electronic control unit, the failure is notified. Therefore, it is possible to rapidly notify the failure.

According to the electronic device of the present invention, the electronic device has the operation support apparatus that, when the electronic control unit that controls the electronic device is out of order, supports operations of the other electronic device that is controlled by the electronic control unit, and the operation support apparatus consists of the operation support apparatus of the present invention. That is, the operation support apparatus of the electronic device transmits the operation state transition request control signal to the other electronic device, which is controlled by the electronic control unit, when the failure of the electronic control unit is detected, and the other electronic devices are configured to shift to the pre-defined safe operation states upon reception of the operation state transition request control signal. Thereby, it is possible to shift the electronic device to the safe operation state without mounting the function of detecting the failure of the electronic control unit and the like on the other electronic device.

According to the electronic control unit of the present invention, the electronic control unit has one or more operation support apparatuses that, when other electronic control unit is out of order, support operations of the electronic devices that are controlled by the other electronic control unit having the failure, and the operation support apparatus consists of the operation support apparatus of the present invention. That is, the operation support apparatus of the electronic control device transmits the operation state transition request control signal to the electronic devices, which are controlled by the other electronic control unit having the failure, when the failure of the one or more other electronic control units is detected, and the electronic devices are configured to transition to the pre-defined safe operation upon reception of the operation state transition request control signal. Thereby, it is possible to shift the electronic device to the operation state without mounting the function of detecting the failure of the electronic control unit controlling the electronic device and the like on the electronic device.

According to the control system of the present invention, at least one of the electronic control units of the control system is configured as the electronic control unit of the present invention, and the electronic device is configured to transition to the pre-defined safe operation state upon reception of the predetermined operation state transition request control signal. That is, the operation support apparatus of at least one electronic control unit of the plurality of electronic control units provided to the control system transmits the operation state transition request control signal to the electronic device, which is controlled by the other electronic control unit having the failure, when the failure of the one or more other electronic control units is detected, and the electronic device shifts to the pre-defined safe operation state when the operation state transition request control signal is received. Therefore, it is possible to shift the electronic device to the safe operation state without mounting the function of detecting the failure of the electronic control unit controlling the electronic device and the like on the electronic device.

### Advantageous Effects of Invention

According to the operation support apparatus of the present invention, the operation support apparatus transmits the operation state transition request control signal to the electronic device, which is controlled by the electronic control unit, when the failure of the electronic control unit is detected, and the electronic device is configured to transition to the pre-defined safe operation state upon the reception of the operation state transition request control signal. Thereby, it is possible to shift the electronic device to the safe operation state without mounting the function of detecting the failure of the electronic control unit and the like on the electronic device. Hence, it is possible to configure the design of the electronic device and the hardware resources (memory, CPU) equivalently to those of the related art and to suppress the increase in the manufacturing costs of the electronic devices and the system including the same.

Also, according to the operation support apparatus of the present invention, since it is possible to rapidly notify the failure of the electronic control unit, it is possible to beforehand prevent a danger that may be caused due to the failure.

According to the electronic device of the present invention, the operation support apparatus of the electronic device transmits the operation state transition request control signal to the other electronic device, which is controlled by the electronic control unit, when the failure of the electronic control unit is detected, and the other electronic device is configured to transition to the pre-defined safe operation state upon the reception of the operation state transition request control signal Thereby, it is possible to shift the electronic device to the safe operation state without mounting the function of detecting the failure of the electronic control unit and the like on the other electronic device. Hence, it is possible to configure the design of the other electronic device and the hardware resources (memory, CPU) equivalently to those of the related art and to suppress the increase in the manufacturing costs of the electronic devices and the system including the same. Also, the electronic device is configured to include the operation support apparatus, so that it is not necessary to provide an independent and dedicated operation support apparatus and it is possible to suppress the increase in the manufacturing cost of the system.

According to the electronic control unit of the present invention, the operation support apparatus of the electronic control unit transmits the operation state transition request control signal to the electronic device, which is controlled by the other electronic control unit having the failure, when the failure of the one or more other electronic control units is detected, and the electronic device is configured to transition to the pre-defined safe operation state upon the reception of the operation state transition request control signal. Thereby, it is possible to shift the electronic device to the safe operation state without mounting the function of detecting the failure of the electronic control unit controlling the electronic device and the like on the electronic device. Hence, it is possible to configure the design of the electronic device and the hardware resources (memory, CPU) equivalently to those of the related art and to suppress the increase in the manufacturing costs of the electronic devices and the system including the same. Also, the electronic control unit is configured to include the operation support apparatus, so that it is not necessary to provide an independent and dedicated operation support apparatus and it is possible to suppress the increase in the manufacturing cost of the system.

According to the control system of the present invention, the operation support apparatus of at least one electronic control unit of the plurality of electronic control units provided to the control system transmits the operation state transition request control signal to the electronic device, which is controlled by the other electronic control unit having the failure, when the failure of the one or more other electronic control units is detected, and the electronic device is configured to transition to the pre-defined safe operation state upon the reception of the operation state transition request control signal Thereby, it is possible to shift the electronic device to the safe operation state without mounting the function of detecting the failure of the electronic control unit controlling the electronic device and the like on the electronic device. Hence, it is possible to configure the design of the electronic device and the hardware resources (memory, CPU) equivalently to those of the related art and to suppress the increase in the manufacturing costs of the electronic devices and the system including the same. Also, the electronic control unit is configured to include the operation support apparatus, so that it is not necessary to provide an independent and dedicated operation support apparatus and it is possible to suppress the increase in the manufacturing cost of the system.

### Brief Description of Drawings

FIG. 1 shows a configuration of a vehicle control system that is an illustrative embodiment of the control system of the present invention.
FIG. 2 is a schematic configuration view of a main control unit that is provided to the vehicle control system of FIG. 1.
FIG. 3 is a schematic configuration view of a relaying connector unit (other electronic control unit) that is provided to the vehicle control system of FIG. 1.
FIG. 4 is a schematic configuration view of a relaying connector unit (an electronic control unit) that is provided to the vehicle control system of FIG. 1.
FIG. 5 is a schematic configuration view of an electronic device that is provided to the vehicle control system of FIG. 1.
FIG. 6 is a sequence diagram illustrating an operation example of the vehicle control system of FIG. 1.
FIG. 7 shows a configuration of a first modified embodiment of the vehicle control system of FIG. 1.
FIG. 8 shows a configuration of a second modified embodiment of the vehicle control system of FIG. 1.
FIG. 9 is a schematic configuration view of an operation support apparatus that is provided to the vehicle control system of FIG. 8.
FIG. 10 shows a configuration of a third modified embodiment of the vehicle control system of FIG. 1.
FIG. 11 shows a configuration of a control system of the related art.
FIG. 12 shows a configuration of another control system of the related art.

### Description of Embodiments

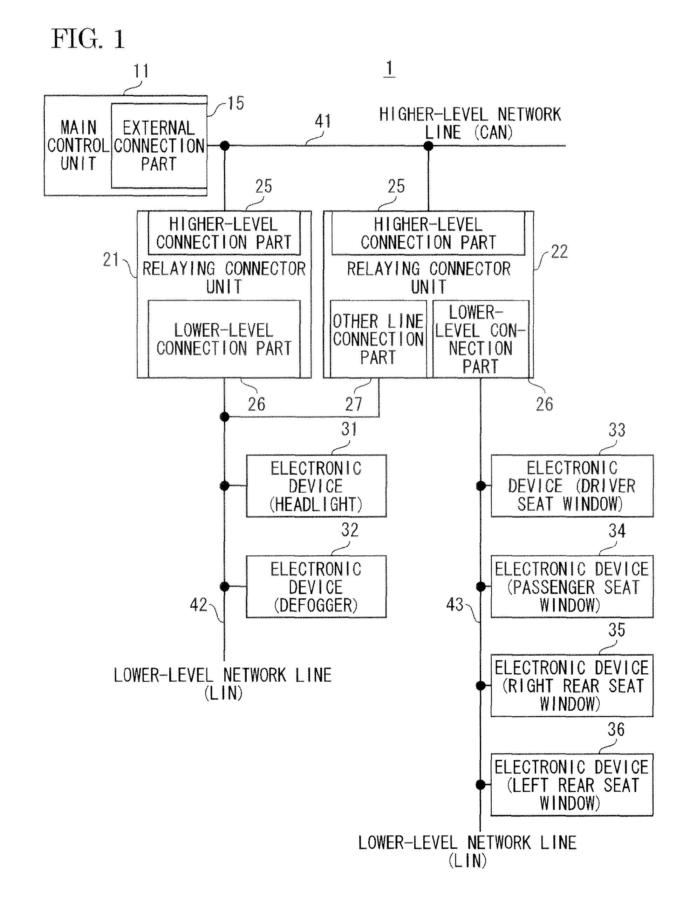

Hereinafter, a vehicle control system that is an illustrative embodiment of the control system of the present invention will be described with reference to FIGS. 1 to 6.

A vehicle such as automobile is mounted with electronic devices such as headlight, defogger, air conditioner, power window and the like. The electronic devices are connected to a main control unit via a wire harness and controlled by the main control unit and a vehicle control system is configured by the electronic devices and the main control unit. When a dedicated connection circuit (i.e., electric wire) is provided to each of the electronic devices, the number of the electronic devices controlled by the main control unit is increased, so that the number of circuits (i.e., the number of electric wires) of the wire harness connecting the main control unit and the electronic devices is increased.

Therefore, in the vehicle control system of this illustrative embodiment, a relaying connector unit serving as an auxiliary electronic control unit is provided between the main control unit and the electronic devices and a control signal is relayed by the relaying connector unit, so that the electronic devices are indirectly controlled. Also, the electronic devices are integrated as regards each function thereof by the relaying connector unit to thus configure a lower-level network and the main control unit and the relaying connector unit configure a higher-level network.

As shown in FIG. 1, a vehicle control system 1 has a main control unit 11, a plurality of relaying connector units 21, 22 serving as electronic control units and a plurality of electronic devices 31 to 36. The vehicle control system 1 further has a higher-level network line 41 consisting of a wire harness serving as a communication line connecting the main control unit 11 and the relaying connector units 21, 22 and lower-level network lines 42, 43 consisting of a wire harness serving as a control signal line connecting the respective relaying connector units 21, 22 and the electronic devices 31 to 36 controlled by the relaying connector units 21, 22.

In the vehicle control system 1, the relaying connector unit 22 monitors a failure of the other relaying connector unit 21, and upon detection of the failure of the relaying connector unit 21, supports operations of the electronic devices 31, 32 that are controlled by the relaying connector unit 21.

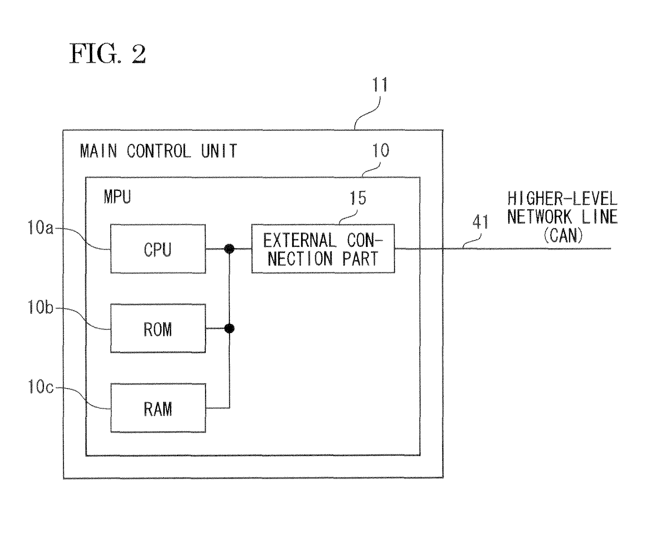

The main control unit 11 has a box-shaped housing (not shown) and a microprocessor (MPU) 10 that is accommodated in the housing and operates in response to a predetermined program. The MPU 10 controls the entire vehicle control system 1. As shown in FIG. 2, the MPU 10 has a central processing unit (CPU) 10a that performs a variety of processing, controls and the like in response to predetermined programs, a ROM 10b that is a read only memory storing processing programs, a variety of information and the like for the CPU 10a, a RAM 10c that is a writable/readable memory storing a variety of data and having areas necessary for processing jobs of the CPU 10a.

Also, the MPU 10 consists of a communication module and the like connected to the CPU 10a and further has an external connection part 15 serving as an external interface part. The external connection part 15 is connected to the higher-level network line 41 and is configured to perform communication (CAN communication) between the main control unit 11 and the relaying connector units 21, 21 by using the well-known CAN (Controller Area Network) protocol.

In the external connection part 15, respective signal lines thereof are connected to terminal fittings of a connector socket (not shown) that is provided at an outside of the housing of the main control unit 11 with a fitting part being exposed. A connector plug that is provided to the wire harness configuring the higher-level network line 41 is fitted to the connector socket, so that the external connection part 15 and the higher-level network line 41 are electrically connected.

Also, the main control unit 11 is connected with an operation part (not shown) that consists of a plurality of switches and the like. The main control unit 11 is configured to detect an operation that is input to the operation unit. Also, the main control unit 11 is configured to communicate with other control units such as combination meter (not shown) provided at the front of a vehicle driver seat.

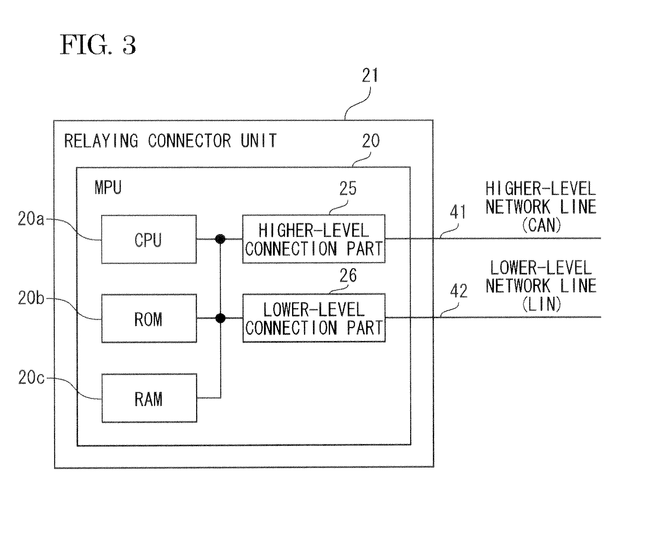

The relaying connector unit 21 has a connector housing (not shown) and a microprocessor (MPU) 20 that is accommodated in the connector housing and operates in response to a predetermined program. The MPU 20 controls the entire relaying connector unit 21. As shown in FIG. 3, the MPU 20 has a CPU 20a, a ROM 20b, a RAM 20c and the like, like the MPU 10a of the main control unit 11. In the meantime, since the processing in the relaying connector unit 21 is simpler than that in the main control unit 11, the MPU 20 of the relaying connector unit 21 that has a lower function and is less expensive than the MPU 10 of the main control unit 11 is used. Thereby, the overall manufacturing cost of the vehicle control system 1 can be reduced.

Also, the MPU 20 consists of a communication module and the like connected to the CPU 20a and has a higher-level connection part 25 and a lower-level connection part 26 functioning as external interface parts. The higher-level connection part 25 is connected to the higher-level network line 41 and is configured so that the CAN communication can be performed between the main control unit 11 and the relaying connector unit 21. Also, the lower-level connection part 26 is connected to the lower-level network line 42 and is configured so that communication (LIN communication) using the well-known LIN (Local Interconnect Network) protocol can be performed between the relaying connector unit 21 and the electronic devices 31, 32.

Signal lines of the higher-level connection part 25 are respectively connected to terminal fittings of a socket part provided to the connector housing (not shown) of the relaying connector unit 21 and a connector plug, which is provided to the wire harness configuring the higher-level network line 41, is fitted to the socket part, so that the higher-level connection part 25 and the higher-level network line 41 are electrically connected. Also, respective signal lines of the lower-level connection part 26 are connected to crimping terminal fittings provided to the connector housing (not shown) of the relaying connector unit 21 and the crimping terminal fittings are crimped to a wire harness configuring the lower-level network line 42, so that the lower-level connection part 26 and the lower-level network line 42 are electrically connected.

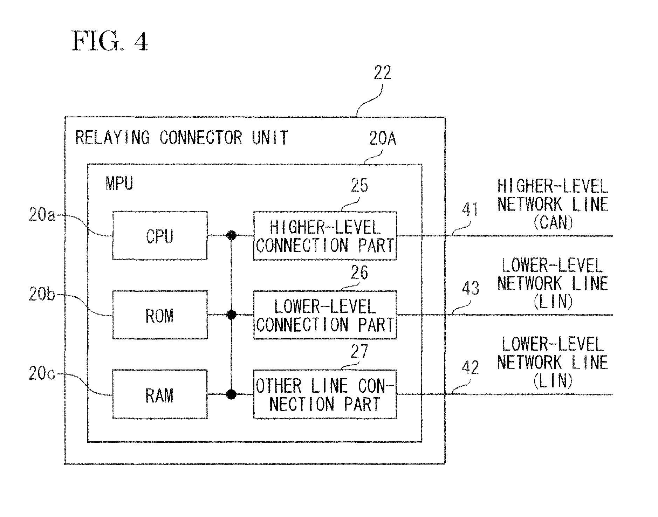

Like the relaying connector unit 21, the relaying connector unit 22 has a connector housing (not shown) and a microprocessor (MPU) 20A that is accommodated in the connector housing and operates in response to a predetermined program. The MPU 20A controls the entire relaying connector unit 22. As shown in FIG. 4, the MPU 20A has the CPU 20a, the ROM 20b, the RAM 20c, the higher-level connection part 25 and the lower-level connection part 26, which are the same as those of the MPU 20 of the relaying connector unit 21, and also has other line connection part 27 serving as a signal output section and consisting of a communication module and the like connected to the CPU 20a.

Also, like the relaying connector unit 21, the higher-level connection part 25 and the lower-level connection part 26 are connected to the higher-level network line 41 and the lower-level network line 43. Also, the other line connection part 27 is connected to the lower-level network line 42 that is connected to the lower-level connection part 26 of the other relaying connector unit 21, and is configured to receive a variety of signals, which flow through the lower-level network line 42 and are transmitted and received between the relaying connector unit 21 and the electronic devices 31, 32, and to transmit a control signal to the electronic devices 31, 32 connected to the lower-level network line 42.

Signal lines of the other line connection part 27 are respectively connected to crimping terminal fittings provided to the connector housing (not shown) of the relaying connector unit 22 and the crimping terminal fittings are crimped to the wire harness configuring the lower-level network line 42, so that the other line connection part 27 and the lower-level network line 42 are electrically connected.

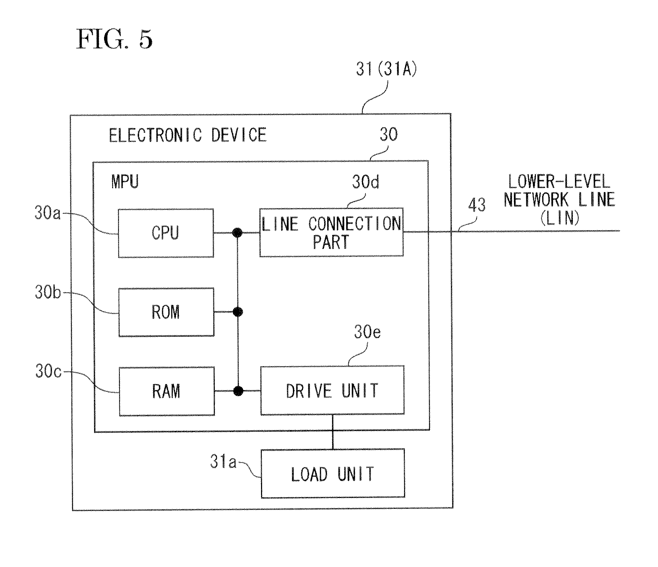

The plurality of electronic devices 31 to 36 are the well-known headlight (electronic device 31), defogger (electronic device 32) and power window (electronic devices 33 to 36). The electronic devices are not limited thereto and the other electronic devices may be also used. FIG. 5 shows a schematic configuration of the electronic device 31. The other electronic devices 32 to 36 also have the similar configurations to that of the electronic device 31.

The electronic device 31 has a connector housing (not shown), a microprocessor (MPU) 30 that is accommodated in the connector housing and operates in response to a predetermined program and a load part 3 a that is separately provided from the connector housing and is connected to the MPU 30 in the connector housing through a conductive wire and the like. The MPU 30 controls the entire electronic device 31. As shown in FIG. 5, the MPU 30 has a CPU 30a, a ROM 30b and a RAM 20c, like the MPU 20 of the relaying connector unit 21, and also has a line connection part 30a consisting of a communication module and the like connected to the CPU 30a and a drive part 30e consisting of a universal I/O port and the like connected to the CPU 30a.

The line connection part 30a is connected to the lower-level network line 42 and is configured so that the well-known LIN communication can be performed between the relaying connector unit 21 and the electronic device 31. Also, respective signal lines of the line connection part 30a are connected to crimping terminal fittings provided to the connector housing (not shown) of the electronic device 31 and the crimping terminal fittings are crimped to the wire harness configuring the lower-level network line 42, so that the line connection part 30a and the lower-level network line 42 are electrically connected.

The drive part 30e is connected to the load part 31a and outputs an H level or L level signal to thereby control the load part 31a.

The load part 31a has a load driving circuit such as power MOSFET (Metal-Oxide-Semiconductor Field-Effect Transistor) for driving a relay configuring a light-lighting switch or heating wire switch and a motor and loads inherent to the respective electronic devices such as light, heating wire, motor and the like to be driven by the load driving circuit.

The electronic devices 31 to 36 perform the operations of lighting/extinction of the light, power feeding to the heating wire, interruption of the power feeding, motor rotation or the like, based on the control signals that are transmitted from the main control unit 11 via the relaying connector units 21, 22. Also, when the electronic devices 31, 32 receive a predetermined operation state transition request control signal, they transition to safe operation states that have been pre-defined for each of the electronic devices. The safe operation state is an operation state of lighting a light in the electronic device 31 that is a headlight and an operation state of feeding power to the heating wire in the electronic device 32 that is a defogger, for example. That is, the safe operation state is an operation state that can secure safety without causing any inconvenience as regards the operation of the vehicle even when it is not possible to secure the control from the main control unit 11 or relaying connector unit 21 in each of the electronic devices 31, 32. The transition processing to the safety operation state in the electronic devices 31, 32 is to perform the existing operations such as lighting of a light, power feeding to the heating wire or the like when received the operation state transition request control signal. Therefore, it is possible to easily mount the functions while suppressing the increase in the throughput and the like of the electronic devices 31, 32.

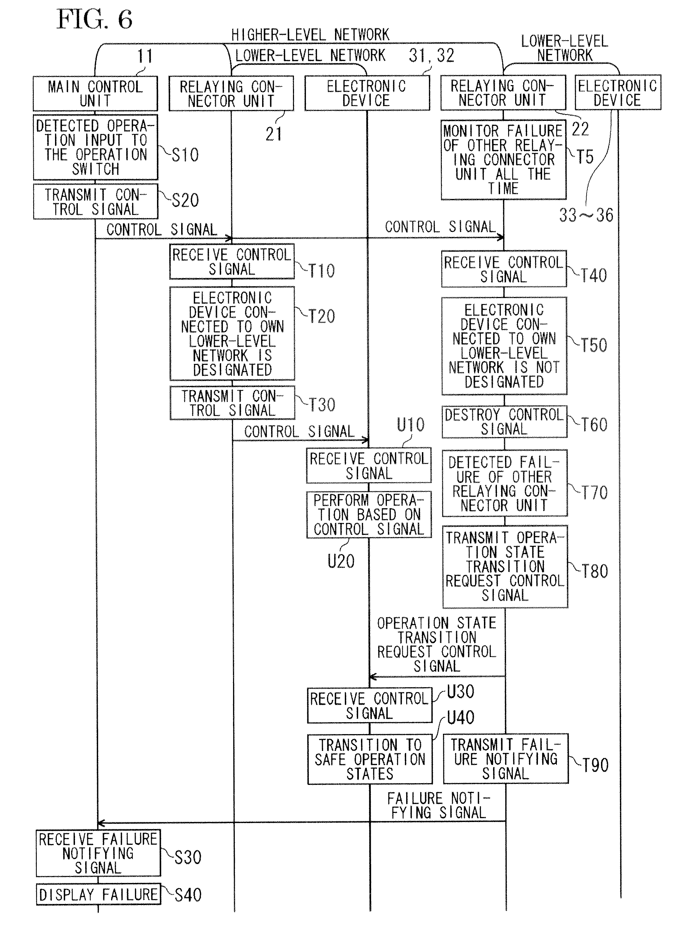

In the below, the typical operations and the operations of the present invention in the main control unit 11, the relaying connector units 21, 21 and the electronic devices 31 to 36 are described with reference to FIG. 6.

The main control unit 11 and the relaying connector units 21, 22 are connected each other by the higher-level network line 41 and configure the higher-level network performing the CAN communication. Also, the relaying connector unit 21 and the electronic devices 31, 32 are connected each other by the lower-level network line 42 and the relaying connector unit 22 and the electronic devices 33 to 36 are connected each other by the lower-level network line 43, thereby configuring a plurality of lower-level networks performing the LIN communication. The relaying connector units 21, 22 function as master nodes in the LIN communication and the respective electronic devices 31 to 36 function as slave nodes. That is, the relaying connector units 21, 22 control the respective electronic devices 31 to 36. Also, the relaying connector unit 22 is also connected with the lower-level network line 42 that is connected to the other relaying connector unit 21. Also, the relaying connector units 21, 22 and the electronic devices 31 to 36 have unique identifiers (IDs) for identifying the same in the LIN communication.

When an operation is input to the operation unit (not shown), the CPU 10a of the main control unit 11 detects the input operation and specifies an ID of the electronic device, which is a transmission destination, by referring to a data table and the like showing a relation between the input operation and the ID of the electronic device corresponding thereto, which is stored in the ROM 10b and the like, for example, so as to control the electronic device corresponding to the operation (S10). Then, the CPU generates a data frame (i.e., control signal) for CAN communication, in which command information relating to the input operation and ID information indicating the specified ID are included in a data field, and transmits the same from the external connection part 15 through the higher-level network line 41 (S20).

When the data frame is transmitted by the main control unit 11, the CPUs 20a of the respective relaying connector units 21, 22 receive the data frame through the higher-level network line 41 (T10, T40). When the ID information included in the data field of the data frame indicates an electronic device connected to the lower-level network of the corresponding relaying connector unit (T20), the CPU 20a generates a LIN frame (i.e., control signal) for LIN communication in accordance with the command information included in the data field and transmits the same towards the electronic device indicated by the ID information through the lower-level network line 42, 43 (T30). Also, when the ID information included in the data field of the data frame does not indicate an electronic device connected to the lower-level network of the corresponding relaying connector unit (T50), the CPU 20a destroys the data frame (T60). Then, the CPUs 20a of the respective relaying connector units 21, 22 wait for reception of a next data frame.

When the CPU 30a of each of the electronic devices 31 to 36 receives the LIN frame, which is transmitted from the relaying connector units 21, 22 and has the corresponding electronic device as a destination, the CPU 30a outputs a signal based on the LIN frame from the drive part 30e toward the load part 31a. Thereby, the load part 31a performs an operation in response to the operation input to the operation unit (U20).

In the LIN communication that is used in the lower-level network, a master-slave type is adopted and the maser node manages a communication schedule and transmits a control signal to each slave node at predetermined timing. At normal operation time, the control signal is continuously transmitted at a predetermined time interval through the lower-level network line 42, and at abnormal operation time, the control signal is not transmitted. Therefore, when the transmission time interval of the control signal is largely prolonged, it can be determined that the relaying connector unit 21 serving as the master node is out of order.

Therefore, the CPU 20a of the relaying connector unit 22 always receives the control signal, which flows through the lower-level network line 42 connected to the other relaying connector unit 21, measures a transmission time interval of the control signal that is transmitted from the relaying connector unit 21 and compares the transmission time interval and preset failure determination base time to thus monitor whether the other relaying connector unit 21 is out of order (T5).

When the measured transmission time interval exceeds the failure determination base time, the CPU 20a of the relaying connector unit 22 determines that the failure of the other relaying connector unit 21 is detected (T70) and transmits an operation state transition request control signal, for shifting the electronic devices 31, 32 to safe operation states that have been pre-defined for each of the electronic devices, from the other line connection part 27 to the electronic devices 31, 32 through the lower-level network line 42 (T80). That is, when the relaying connector unit 22 detects the failure of the other relaying connector unit 21, the relaying connector unit 22 supports operations of the electronic devices 31, 32 that are controlled by the other relaying connector unit 21. Also, the relaying connector unit 22 generates a data frame (i.e., failure notifying signal) serving as the control signal notifying the failure of the other relaying connector unit 21 and transmits the same through the higher-level network line 41 (T90).

The CPU 10a of the main control unit 11 receives the data frame (failure notifying signal) transmitted by the relaying connector unit 22 (S30). Then, the CPU 10a of the main control unit 11 recognizes the failure of the relaying connector unit 21 by the received failure notifying signal, transmits a signal notifying the failure to the combination meter (not shown) provided at the front of the vehicle driver seat and displays a display indicating the failure on a display apparatus such as liquid crystal monitor provided to the combination meter. In the meantime, the processing in T70 that is performed by the CPU 20a of the relaying connector unit 22 corresponds to the failure detecting section, the processing in T80 corresponds to the control signal transmitting section and the processing in T90 corresponds to the failure notifying section. Also, the MPU 20A of the relaying connector unit 22 corresponds to the operation support apparatus.

In the below, an example of the operations of the vehicle control system 1 is described.

When a headlight switch provided at the driver seat becomes on, the main control unit 11 detects the on operation and transmits a control signal, which requests the lighting of the light, to the electronic device 31 that is the headlight through the higher-level network line 41 (S10, S20). The relaying connector unit 21 to which the electronic device 31 is connected relays the control signal and transmits the same to the electronic device 31 that is connected to the lower-level network line 42 (T10 to T30). Also, the relaying connector unit 22 to which the electronic device 31 is not connected destroys the control signal (T40 to T60). Then, the electronic device 31 drives the relay, based on the control signal, thereby turning on the headlight (U10, U20).

Also, the relaying connector unit 22 monitors whether the other relaying connector unit 21 is out of order. When the failure of the other relaying connector unit 21 is detected, the relaying connector unit 22 transmits a predetermined operation state transition request control signal from the other line connection part 27 to the electronic devices 31, 32 through the lower-level network line 42 (T5, T70, T80) and notifies the main control unit 11 of the failure (T90). When the electronic device 31 receives the operation state transition request control signal, it turns on the headlight, and when the electronic device 32 receives the operation state transition request control signal, it feeds power to the heating wire (U30, U40). Also, the main control unit 11 notifies a passenger of the failure through the combination meter (S30, S40).

As described above, according to this illustrative embodiment, the relaying connector unit 22 detects the failure of the other relaying connector unit 21. When detected the failure, the relaying connector unit 22 transmits the predetermined operation state transition request control signal from the other line connection part 27 to the electronic devices 31, 32. That is, when the relaying connector unit 22 detects the failure of the other relaying connector unit 21, the relaying connector unit 22 transmits the operation state transition request control signal to the electronic devices 31, 32 that are controlled by the other relaying connector unit 21, and the electronic devices 31, 32 shift to the pre-defined safe operation states upon the reception of the operation state transition request control signal. Therefore, it is possible to shift the electronic devices 31, 32 to the safe operation states without mounting the function of detecting the failure of the relaying connector unit 21, which controls the electronic devices 31, 32, and the like on the electronic devices 31, 32. Thereby, it is possible to configure the design of the electronic devices 31, 32 and the hardware resources (memory, CPU) equivalently to those of the related art and to thus suppress the increase in the manufacturing costs of the electronic devices 31, 32 and the vehicle control system 1 including the same. Also, since the relaying connector unit 22 (i.e., MPU 20A) detects the failure of the other relaying connector unit 21 and transmits the predetermined operation state transition request control signal, it is not necessary to provide an independent and dedicated operation support apparatus having the corresponding function, and the like and it is possible to suppress the increase in the manufacturing cost of the vehicle control system 1.

Also, when the relaying connector unit 22 detects the failure of the other relaying connector unit 21, the failure is notified to the main control unit 11. Therefore, the failure is notified to the passenger from the main control unit 11 through the combination meter and the failure of the other relaying connector unit 21 can be rapidly notified. Thereby, it is possible to beforehand prevent a danger that may be caused due to the failure.

In this illustrative embodiment, the relaying connector unit 22 detects the failure of the other relaying connector unit 21 and supports the operations of the electronic devices. 31, 32 that are controlled by the other relaying connector unit 21. In addition, for example, the relaying connector unit 21 may be configured to be the same as the relaying connector unit 22, to detect the failure of the relaying connector unit 22 and to support the operations of the electronic devices 33 to 36 that are controlled by the relaying connector unit 22. That is, in the vehicle control system 1, the plurality of relaying connector units 21, 22 may be configured to support the operations of the electronic devices that are controlled by the other relaying connector units, each other. In this case, the electronic devices 33 to 36 should be configured to transition to the safe operation states that have been pre-defined for each of the electronic devices, when the predetermined operation state transition request control signal is received.

Also, in this illustrative embodiment, the relaying connector unit 22 detects the failure of the relaying connector unit 21, based on the transmission time interval of the control signal that is transmitted from the relaying connector unit 21 through the lower-level network line 42. However, the present invention is not limited thereto. The relaying connector unit 22 may detect the failure of the relaying connector unit 21, based on the control signal that is transmitted from the relaying connector unit 21 through the higher-level network line 41, for example, and the detection method is arbitrary insomuch as the failure of the relaying connector unit 21 can be detected.

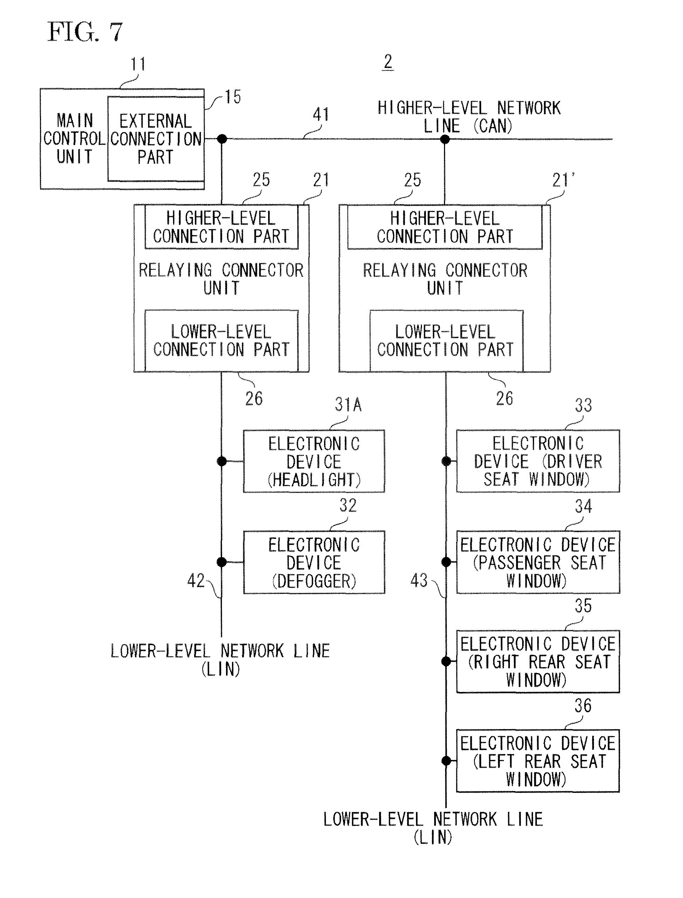

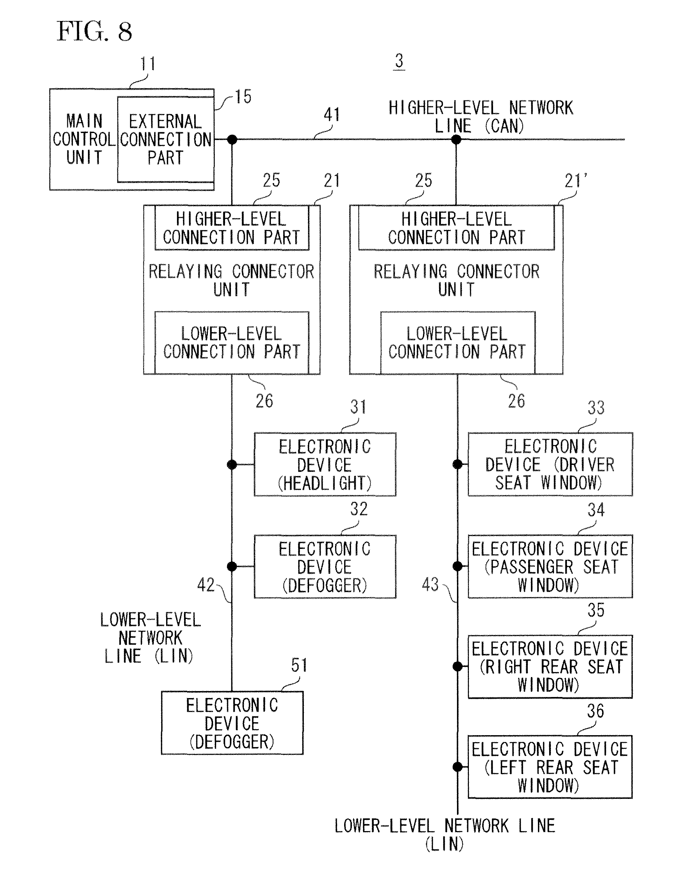

Also, in this illustrative embodiment, the relaying connector unit 22 has the MPU 20 serving as the operation support apparatus and supports the operations of the electronic devices 31, 32 that are controlled by the other relaying connector unit 21. However, the present invention is not limited thereto. FIGS. 7 and 8 show vehicle control systems that are modified embodiments of the above illustrative embodiment.

In a first modified embodiment of the above illustrative embodiment, a vehicle control system 2 shown in FIG. 7 has a relaying connector unit 21' having the same configuration as the relaying connector unit 21, instead of the relaying connector unit 22 of the vehicle control system 1, and an electronic device 31A that is configured to monitor the failure of the relaying connector unit 21 and upon detection of the failure, to transmit the operation state transition request control signal to the other electronic device 32, which is controlled by the relaying connector unit 21, instead of the electronic device 31.

That is, the vehicle control system 2 is configured to monitor the failure of the relaying connector unit 21 by the electronic device 31A and to support the operation of the other electronic device 32 that is controlled by the relaying connector unit 21 when detected the failure of the relaying connector unit 21.

Specifically, the electronic device 31A has the same configuration as the electronic device 31 shown in FIG. 5 and the CPU 30a of the electronic device 31A always receives the control signal, which flows through the lower-level network line 42 connected to the relaying connector unit 21, from the line connection part 30a, measures the transmission time interval of the control signal that is transmitted from the relaying connector unit 21 and compares the transmission time interval and the preset failure determination base time to thus monitor whether the other relaying connector unit 21 is out of order. When the CPU 30a detects the failure of the relaying connector unit 2 1, it transmits the predetermined operation state transition request control signal from the line connection part 30a to the electronic device 32 through the lower-level network line 42. Then, the CPU 30a shifts the electronic device 31A to the safe operation state.

Also, the electronic device 31A may transmit a failure notifying signal, which notifies the main control unit 11 and the like of the failure of the relaying connector unit 21, through a dedicated signal line and the like. That is, the CPU 30a of the electronic device 31A corresponds to the failure detecting section, the control signal transmitting section and the failure notifying section and the line connection part 30a corresponds to the signal output section. Also, the MPU 30 of the electronic device 31A corresponds to the operation support apparatus.

Like this, the electronic device 31A detects the failure of the relaying connector unit 21. When the failure is detected, the electronic device 31A transmits the predetermined operation state transition request control signal from the line connection part 30a to the other electronic device 32. That is, when the electronic device 31A detects the failure of the relaying connector unit 21, the electronic device 31A transmits the operation state transition request control signal to the other electronic device 32 that is controlled by the relaying connector unit 21, and the other electronic device 32 transitions to the pre-defined safe operation state upon the reception of the operation state transition request control signal. Therefore, it is possible to shift the electronic device 32 to the safe operation state without mounting the function of detecting the failure of the relaying connector unit 21 and the like on the other electronic device 32. Thereby, it is possible to configure the design of the other electronic device 32 and the hardware resources (memory, CPU) equivalently to those of the related art and to thus suppress the increase in the manufacturing costs of the electronic device 32 and the vehicle control system 2 including the same. Also, since the MPU 30 of the electronic device 31A detects the failure of the relaying connector unit 21 and transmits the predetermined operation state transition request control signal to the other electronic device 32 that is controlled by the relaying connector unit 21, it is not necessary to provide an independent and dedicated operation support apparatus having the corresponding function, and the like and it is possible to suppress the increase in the manufacturing cost of the vehicle control system 2.

Also, when the electronic device 31A detects the failure of the relaying connector unit 21, the failure is notified to the main control unit 11, so that the failure of the relaying connector unit 21 can be rapidly notified to the passenger. Thereby, it is possible to beforehand prevent a danger that may be caused due to the failure.

In a second modified embodiment of the above illustrative embodiment, a vehicle control system 3 shown in FIG. 8 has a relaying connector unit 21' having the same configuration as the relaying connector unit 21, instead of the relaying connector unit 22 of the vehicle control system 1, controls the electronic devices 33 to 36 connected to the lower-level network line 43 by the relaying connector unit 21' and further has an operation support apparatus 51 connected to the lower-level network line 42.

The vehicle control system 3 is configured to monitor the failure of the relaying connector unit 21 and to support the operations of the electronic devices 31, 32, which are controlled by the relaying connector unit 21, upon the detection of the failure of the relaying connector unit 21, by the operation support apparatus 53.

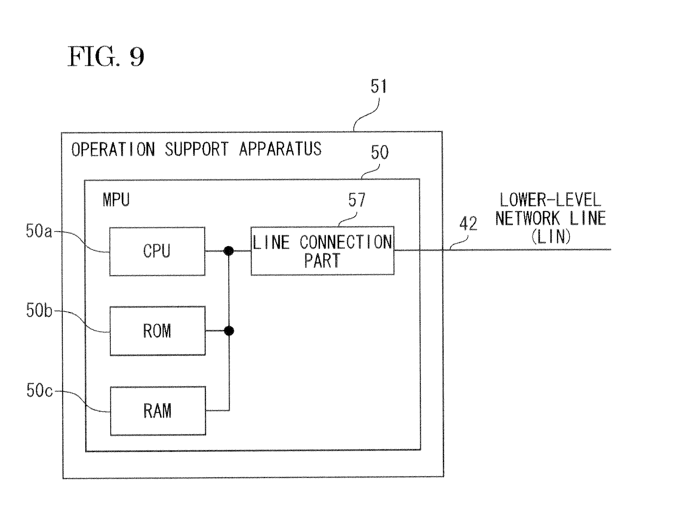

The operation support apparatus 51 has a connector housing (not shown) and a microprocessor (MPU) 50 that is accommodated in the connector housing and operates in response to a predetermined program. The MPU 50 controls the entire operation support apparatus 50. As shown in FIG. 9, the MPU 50 has a CPU 50a, a ROM 50b and a RAM 50c, like the MPU 30a of the electronic device 31, and further has a line connection part 57 consisting of a communication module and the like connected to the CPU 50a.

The line connection part 57 is connected to the lower-level network line 42 and is configured to receive a variety of signals, which flow through the lower-level network line 42 and are transmitted and received between the relaying connector unit 21 and the electronic devices 31, 32, and to transmit the control signal to the electronic devices 31, 32 connected to the lower-level network line 42. Also, respective signal lines of the line connection part 57 are connected to crimping terminal fittings provided to the connector housing (not shown) of the operation support apparatus 51 and the crimping terminal fittings are crimped to the wire harness configuring the lower-level network line 42, so that the line connection part 57 and the lower-level network line 42 are electrically connected.

The CPU 50a of the operation support apparatus 51 always receives the control signal, which flows through the lower-level network line 42 connected to the relaying connector unit 21, measures the transmission time interval of the control signal that is transmitted from the relaying connector unit 21 and compares the transmission time interval and preset failure determination base time to thus monitor whether the other relaying connector unit 21 is out of order. When the failure of the relaying connector unit 21 is detected, the CPU 50a transmits the predetermined operation state transition request control signal from the line connection part 57 to the electronic devices 31, 32 through the lower-level network line 42.

Also, the CPU 50a of the operation support apparatus 51 may transmit a failure notifying signal, which notifies the main control unit 11 and the like of the failure of the relaying connector unit 21, by a dedicated signal line and the like. That is, the CPU 50a of the operation support apparatus 51 corresponds to the failure detecting section, the control signal transmitting section and the failure notifying section and the line connection part 57 corresponds to the signal output section.

Like this, the operation support apparatus 51 detects the failure of the relaying connector unit 21 and transmits the operation state transition request control signal from the line connection part 57 to the electronic devices 31, 32 when the failure is detected. That is, when the operation support apparatus 51 detects the failure of the relaying connector unit 21, the operation support apparatus transmits the operation state transition request control signal to the electronic devices 31, 32 that are controlled by the relaying connector unit 21, and the electronic devices 31, 32 transition to the pre-defined safe operation states upon the reception of the operation state transition request control signal. Therefore, it is possible to shift the electronic devices 31, 32 to the safe operation states without mounting the function of detecting the failure of the relaying connector unit 21 and the like on the other electronic devices 31, 32. Thereby, it is possible to configured the design of the other electronic devices 31, 32 equivalently to that of the related

Also, when the operation support apparatus 51 detects the failure of the relaying connector unit 21, the failure is notified to the main control unit 11, so that it is possible to rapidly notify the passenger of the failure of the relaying connector unit 21. Thereby, it is possible to beforehand prevent a danger that may be caused due to the failure.

Also, in the above illustrative embodiment, when the other one relaying connector unit 21 is out of order, the relaying connector unit 22 supports the operations of the electronic devices 31, 32 that are controlled by the other relaying connector unit. However, the present invention is not limited thereto.

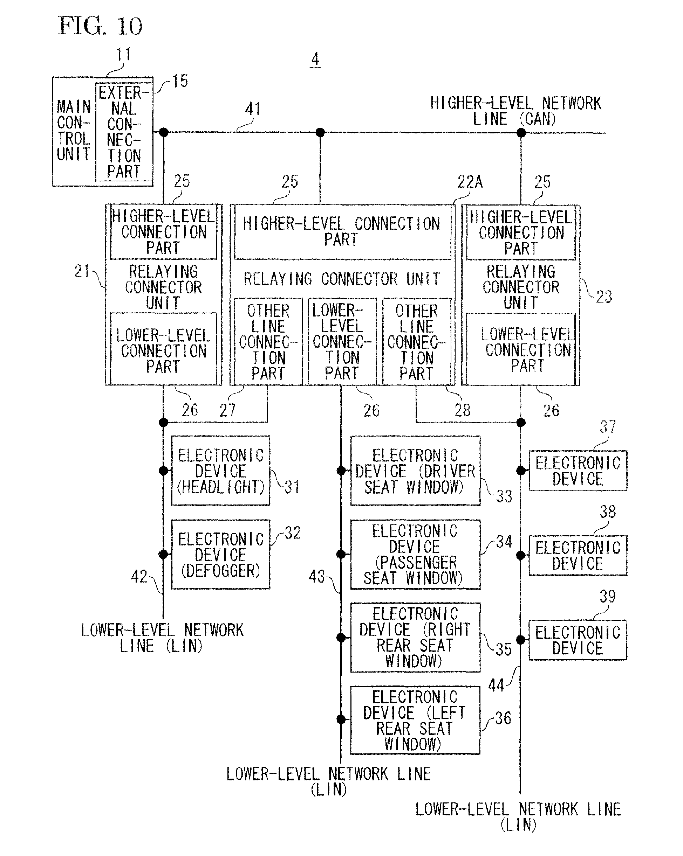

In a third modified embodiment of the above illustrative embodiment, a vehicle control system 4 shown in FIG. 10 has a new lower-level network that includes a relaying connector unit 23 having the same configuration as the relaying connector unit 21 of the vehicle control system 1, a plurality of electronic devices 37 to 39 and a lower-level network line 44 and performs the LIN communication. Also, the vehicle control system has a relaying connector unit 22A in which other line connection part 28 is newly added to the relaying connector unit 22, instead of the relaying connector unit 22. The new other line connection part 28 is connected to the lower-level network line 44.

The CPU 20a of fhe relaying connector unit 22A always receives the control signal, which flows through the lower-level network line 42 connected to the other relaying connector unit 21, to thus monitor whether the other relaying connector unit 21 is out of order, also always receives the control signal, which flows through the lower-level network line 44 connected to the other relaying connector unit 23, to thus monitor whether the other relaying connector unit 23 is out of order.

When the failure of the other relaying connector unit 21 is detected, the CPU 20a of the relaying connector unit 22A transmits the predetermined operation state transition request control signal from the other line connection part 27 to the electronic devices 31, 32 through the lower-level network line 42. Also, when the failure of the other relaying connector unit 23 is detected, the CPU 20a transmits the predetermined operation state transition request control signal from the other line connection part 28 to the electronic devices 37 to 39 through the lower-level network line 44. That is, the MPU 20 of the relaying connector unit 22A operates as a plurality of operation support apparatuses.

Like this, the one relaying connector unit 22A monitors the failure of the relaying connector units 21, 23, and when any one is out of order, supports the operations of the electronic devices that are controlled by the same. Thereby, it is possible to further prevent the increase in the manufacturing cost.

In the above illustrative embodiment, the relaying connector unit serving as the auxiliary electronic control unit is provided between the main control unit and the electronic device and relays the control signal, so that the electronic device is indirectly controlled. However, the present invention is not limited thereto. As a configuration of the vehicle control system, an electronic control unit (sub-control unit) having a higher function may be provided to control each electronic device, instead of the relaying connector unit. Alternatively, the electronic control unit having a higher function may be provided to make each lower-level network independent (i.e., the lower-level networks are not connected to each other by the higher-level network). Also, in the above illustrative embodiment, the present invention is applied to the vehicle control system. However, the present invention is not limited thereto and the uses of the present invention are arbitrary within the purposes of the present invention insomuch as the control system includes the electronic control unit and the electronic device controlled by the same.

The above illustrative embodiments just show the representative modes of the present invention and the present invention is not limited to the illustrative embodiments. That is, a variety of changes can be made without departing from the gist of the present invention.

Although the present invention has been specifically described with reference to the specific illustrative embodiments, it is apparent to one skilled in the art that a variety of changes and modifications can be made without departing from the spirit and scope of the present invention.

The present application is based on Japanese Patent Application No. 2010-264744 filed on November 29, 2010, the contents of which are incorporated herein by reference.

### Industrial Applicability

According to the operation support apparatus, the electronic device, the electronic control unit and the control system of the present invention, it is possible to configure the design of the electronic device and the hardware resources (memory, CPU) equivalently to those of the related art and to suppress the increase in the manufacturing costs of the electronic device and the system including the same.

### Reference Signs List

1, 2, 3, 4: vehicle control system (control system)
11: main control unit
21: relaying connector unit (other electronic control unit)
22: relaying connector unit (electronic control unit)
20A: MPU (operation support apparatus)
20a: CPU (failure detecting section, control signal transmitting section, failure notifying section)
27, 28: other line connection part (signal output section)
31 to 36, 31A: electronic device
41: higher-level network line
42, 43, 44: lower-level network line (control signal line)
51: operation support apparatus

## Claims

1. An operation support apparatus that supports operations of one or more electronic devices mounted on a vehicle when an electronic control unit is out of order, wherein the electronic control unit is connected to the electronic devices through a control signal line and controls the electronic devices through the control signal line, the operation support apparatus comprising:
a failure detecting section that is adapted to detect a failure of the electronic control unit;
a signal output section that is connected to the control signal line so as to transmit a control signal to the electronic devices; and
a control signal transmitting section that is adapted to transmit an operation state transition request control signal to the electronic devices through the signal output section when the failure detecting section detects the failure of the electronic control unit, wherein the operation state transition request control signal is defined for shifting the electronic devices to safe operation states that have been pre-defined for each of the electronic devices.

2. The operation support apparatus according to claim 1, comprising
a failure notifying section that is adapted to notify of the failure of the electronic control unit when the failure detecting section detects the failure.

3. An electronic device that is connected to an electronic control unit through a control signal line and controlled by the electronic control unit through the control signal line, the electronic device comprising:
an operation support apparatus that supports an operation of another electronic device when the electronic control unit is out of order, wherein the another electronic device is connected to the electronic control unit through the control signal line and controlled by the electronic control unit through the control signal line, wherein
the operation support apparatus comprises:
a failure detecting section that is adapted to detect a failure of the electronic control unit;
a signal output section that is connected to the control signal line so as to transmit a control signal to the another electronic device; and
a control signal transmitting section that is adapted to transmit an operation state transition request control signal to the another electronic device through the signal output section when the failure detecting section detects the failure of the electronic control unit, wherein the operation state transition request control signal is defined for shifting the other electronic device to a safe operation state that has been pre-defined for the another electronic device.

4. An electronic control unit comprising:
one or more operation support apparatuses that support operations of one or more electronic devices mounted on a vehicle and controlled by another electronic control unit that is out of order when the another electronic control unit is out of order, wherein the another electronic control unit is connected to the electronic devices through a control signal line and controls the electronic devices through the control signal line, wherein
each of the operation support apparatuses comprises:
a failure detecting section that is adapted to detect a failure of the another electronic control unit;
a signal output section that is connected to the control signal line so as to transmit a control signal to the electronic devices; and
a control signal transmitting section that is adapted to transmit an operation state transition request control signal to the electronic devices through the signal output section when the failure detecting section detects the failure of the another electronic control unit, wherein the operation state transition request control signal is defined for shifting the electronic devices to safe operation states that have been pre-defined for each of the electronic devices.

5. A control system comprising:
a plurality of electronic control units;
a plurality of control signal lines that are provided in correspondence to the electronic control units, respectively; and
a plurality of electronic devices that are respectively connected to the electronic control units through the control signal lines and controlled by the electronic control units, wherein
at least one of the electronic control units is configured as the electronic control unit according to claim 4, and
the electronic devices are configured to transition to pre-defined safe operation states when received a predetermined operation state transition request control signal.
